# EUROPEAN PATENT APPLICATION

(11) **EP 4 756 197 A1**
(43) Date of publication of application: **10.06.2026**
(21) Application number: 25215199.8
(22) Date of filing: 12.11.2025
(51) Int. Cl.: F01N 13/00, F01N 1/02, F01N 3/10

(54) **STRADDLED VEHICLE**

(30) Priority: 03.12.2024 JP 2024210121
(71) Applicant: Yamaha Hatsudoki Kabushiki Kaisha, Iwata-shi, Shizuoka 438-8501 (JP)
(72) Inventor: MITSUNO, Ryo, Iwata-shi, 438-0026 (JP)
(74) Representative: Studio Torta S.p.A.

(57) **Abstract**

There is disclosed an exhaust pipe (20) including a first pipe (31) at least a part of which is arranged inside a case (13), with a first catalyst (41) arranged inside the first pipe (31), and a second pipe (32) arranged inside the case (13); the case (13) including a protruding portion (13a) that protrudes in a direction away from an axis (32c) of the second pipe (32) in a cross section perpendicular to the axis (32c) of the second pipe (32); the oxygen sensor (46) being connected to the second pipe (32) and to the protruding portion (13a) of the case (13).

## Description

### TECHNICAL FIELD

The present invention relates to a straddled vehicle.

### BACKGROUND

Straddled vehicles such as motorcycles having internal combustion engines include an exhaust system for discharging exhaust gas from the internal combustion engine. Exhaust systems have been known in the art that include an exhaust pipe through which exhaust gas flows, a catalyst arranged inside the exhaust pipe, and an oxygen sensor for detecting the oxygen concentration of the exhaust gas.

JP 2016-160914 A, for example, describes an exhaust system including a silencer, a second exhaust pipe in which a catalyst is provided, a fourth exhaust pipe arranged on the downstream side relative to the second exhaust pipe in the flow direction of the exhaust gas, and an oxygen sensor. The second exhaust pipe and the fourth exhaust pipe are arranged inside the silencer. The fourth exhaust pipe has a collar on which an oxygen sensor can be mounted. The silencer has a recess formed therein, and the collar is arranged in the recess. The oxygen sensor is mounted in the recess of the silencer via the collar.

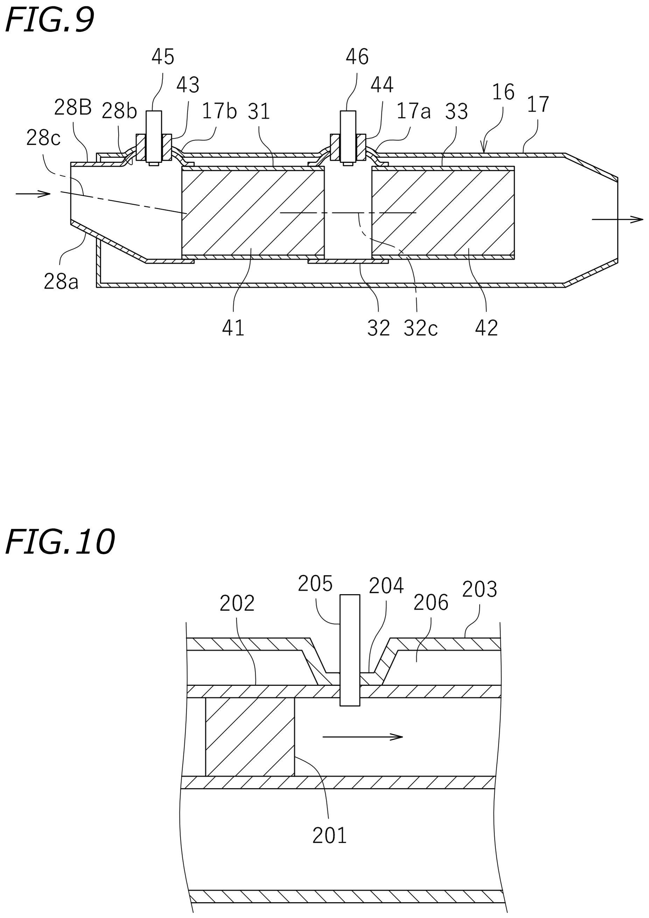

In the exhaust system described above, the silencer constitutes a case that accommodates at least a part of the exhaust pipe in which the catalyst is provided. Fig. 10 is a view schematically showing an exhaust pipe 202 in which a catalyst 201 is provided, a case 203 that accommodates at least a part of the exhaust pipe 202, a recess 204 formed in the case 203, and an oxygen sensor 205 arranged in the recess 204. Thus, when the oxygen sensor 205 is connected to the recess 204 of the case 203, an unused space 206 is generated inside the case 203 around the oxygen sensor 205.

### DISCLOSURE OF THE INVENTION

An object of the present invention is to provide a straddled vehicle having a case that accommodates at least a part of an exhaust pipe in which a catalyst is provided, and an oxygen sensor connected to the case and the exhaust pipe for detecting the oxygen concentration of exhaust gas flowing through the exhaust pipe, wherein it is possible to conserve space in the case.

A straddled vehicle disclosed herein includes: an internal combustion engine; an exhaust pipe connected to the internal combustion engine for discharging exhaust gas from the internal combustion engine; a first catalyst for purifying the exhaust gas flowing through the exhaust pipe; an oxygen sensor for detecting oxygen concentration of the exhaust gas flowing through the exhaust pipe; and a case. The exhaust pipe includes a first pipe at least a part of which is arranged inside the case, with the first catalyst arranged inside the first pipe, and a second pipe arranged inside the case, the oxygen sensor being connected to the second pipe. The case includes a protruding portion that protrudes in a direction away from an axis of the second pipe in a cross section perpendicular to the axis of the second pipe. The oxygen sensor is connected to the protruding portion of the case.

With the straddled vehicle described above, since the oxygen sensor is connected to the protruding portion of the case, an unused space is less likely to be generated inside the case around the oxygen sensor. Therefore, it is possible to conserve space in the case.

The protruding portion of the case may be formed to protrude in the direction away from the axis in a cross section including the axis of the second pipe of the case.

Thus, it is possible to further suppress the generation of an unused space inside the case around the oxygen sensor. Therefore, it is possible to further conserve space in the case.

The straddled vehicle may further include a second catalyst arranged on a downstream side in a flow direction of the exhaust gas relative to the first catalyst in the exhaust pipe. The exhaust pipe may include a third pipe at least a part of which is arranged inside the case, with the second catalyst arranged inside the third pipe. The second pipe may be arranged between the first pipe and the third pipe.

Thus, the oxygen sensor detects the oxygen concentration of the exhaust gas after being purified by the first catalyst and before being purified by the second catalyst.

The second pipe may include a first arc portion having a first curvature and a second arc portion having a second curvature larger than the first curvature in a cross section perpendicular to the axis of the second pipe. The oxygen sensor may be connected to the second arc portion of the second pipe.

Thus, the second arc portion of the second pipe is a protruding portion that protrudes relative to the first arc portion. As does the case, the second pipe also includes the protruding portion. Since the oxygen sensor is connected to the protruding portion of the case and the protruding portion of the second pipe, it is possible to further suppress the generation of an unused space inside the case around the oxygen sensor.

The straddled vehicle may further include: a second catalyst provided on a downstream side in a flow direction of the exhaust gas relative to the first catalyst in the exhaust pipe. The exhaust pipe may include a third pipe at least a part of which is arranged inside the case, with the second catalyst arranged inside the third pipe, and a fourth pipe arranged inside the case and arranged between the first pipe and the third pipe. The second pipe may be arranged on an upstream side in the flow direction of the exhaust gas relative to the first pipe.

Thus, the oxygen sensor detects the oxygen concentration of the exhaust gas before being purified by the first catalyst and the second catalyst.

The second pipe may include a first arc portion having a first curvature and a second arc portion having a second curvature larger than the first curvature in a cross section perpendicular to the axis of the second pipe. The oxygen sensor may be connected to the second arc portion of the second pipe.

Thus, the second arc portion of the second pipe is a protruding portion that protrudes relative to the first arc portion. As does the case, the second pipe also includes the protruding portion. Since the oxygen sensor is connected to the protruding portion of the case and the protruding portion of the second pipe, it is possible to further suppress the generation of an unused space inside the case around the oxygen sensor.

The case may constitute at least a part of an exhaust chamber that expands the exhaust gas or a silencer.

According to the present invention, it is possible to provide a straddled vehicle having a case that accommodates at least a part of an exhaust pipe in which a catalyst is provided, and an oxygen sensor connected to the case and the exhaust pipe for detecting the oxygen concentration of exhaust gas flowing through the exhaust pipe, wherein it is possible to conserve space in the case.

### BRIEF DESCRIPTION OF DRAWINGS

Fig. **1** is a side view of a motorcycle according to an embodiment.
Fig. **2** is a perspective view of an exhaust system according to a first embodiment.
Fig. **3** is a schematic vertical cross-sectional view of an exhaust chamber according to the first embodiment.
Fig. **4** is a cross-sectional view taken along line IV-IV in Fig. 3.
Fig. **5** is a schematic vertical cross-sectional view of the exhaust chamber according to a second embodiment.
Fig. **6** is a perspective view of the exhaust system according to a third embodiment.
Fig. **7** is a schematic vertical cross-sectional view of a silencer according to the third embodiment.
Fig. **8** is a sectional view taken along line VIII-VIII in Fig. 7.
Fig. **9** is a schematic vertical cross-sectional view of a silencer according to a fourth embodiment.
Fig. **10** is a schematic cross-sectional view showing a part of a conventional exhaust system.

### EMBODIMENTS OF THE INVENTION

### (First Embodiment)

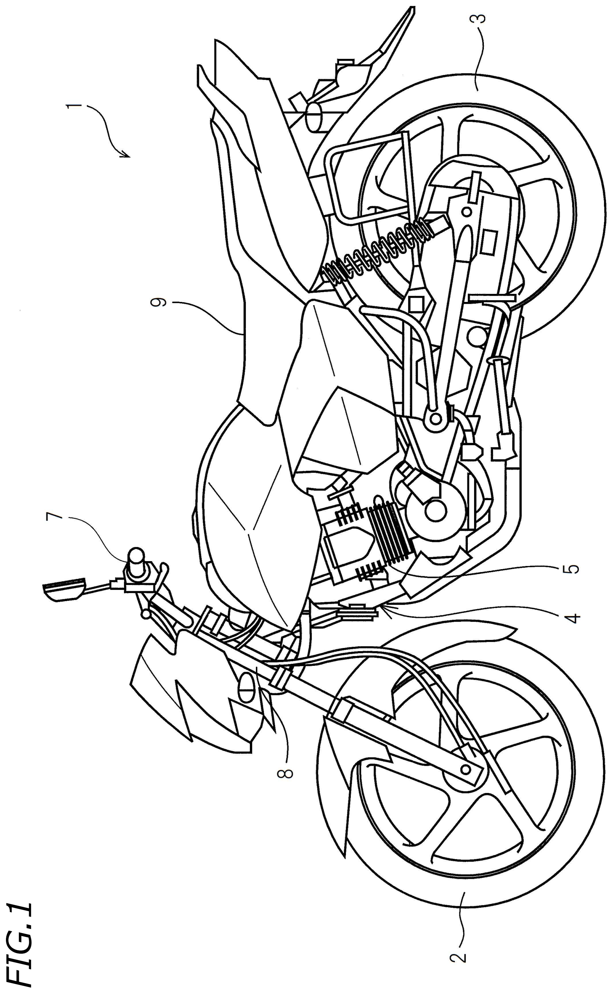

An embodiment of the straddled vehicle will now be described with reference to the drawings. Fig. 1 is a side view of a motorcycle **1,** which is an example of the straddled vehicle. The motorcycle **1** includes a vehicle body frame **4** having a head pipe **8,** an internal combustion engine 5 supported on the vehicle body frame **4,** a seat **9** supported on the vehicle body frame 4, a steering handle **7,** a front wheel **2,** and a rear wheel **3.** The rear wheel **3** is connected to the internal combustion engine **5** via a power transmission mechanism (not shown). The rear wheel **3** is driven by the internal combustion engine **5.**

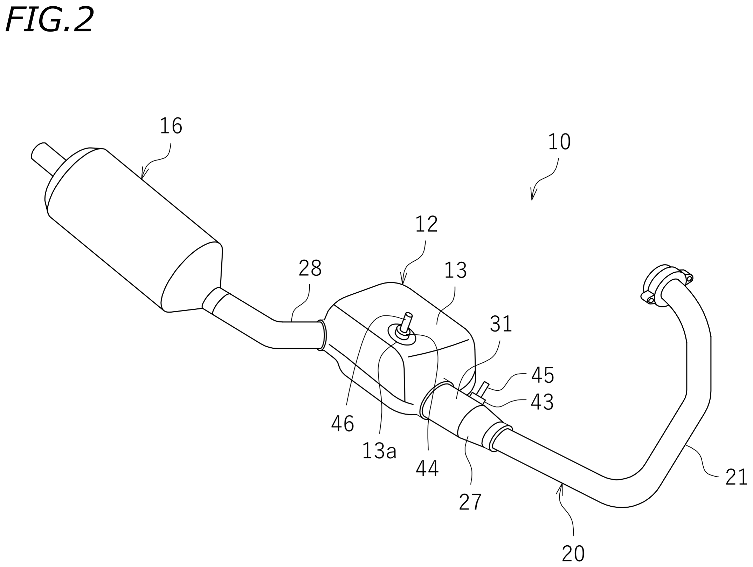

As shown in Fig. **2****,** the motorcycle **1** includes an exhaust system **10** for discharging exhaust gas from the internal combustion engine **5.** Note that the exhaust system **10** is not shown in Fig. **1****.** The exhaust system **10** is connected to the internal combustion engine **5,** and includes an exhaust pipe **20** for discharging exhaust gas from the internal combustion engine **5.** As will be described later, the exhaust pipe **20** is composed of a plurality of pipes. The exhaust system **10** also includes an exhaust chamber **12** and a silencer **16.** In the following description, with regard to the flow direction of the exhaust gas, the side from which the exhaust gas flows is referred to as the upstream side, and the side to which the exhaust gas flows is referred to as the downstream side. In other words, with regard to the exhaust gas flow path, the side toward the internal combustion engine **5** is referred to as the upstream side, and the side toward the silencer **16** is referred to as the downstream side.

Although not particularly limited thereto, the internal combustion engine **5** according to the present embodiment is a single-cylinder internal combustion engine. The exhaust pipe **20** has an upstream pipe **21** connected to the cylinder of the internal combustion engine **5,** and a tapered pipe **27** connected to the downstream end of the upstream pipe **21.** The tapered pipe **27** is a pipe whose inner diameter gradually increases toward the downstream side. A first pipe **31** is connected to the downstream end of the tapered pipe **27.**

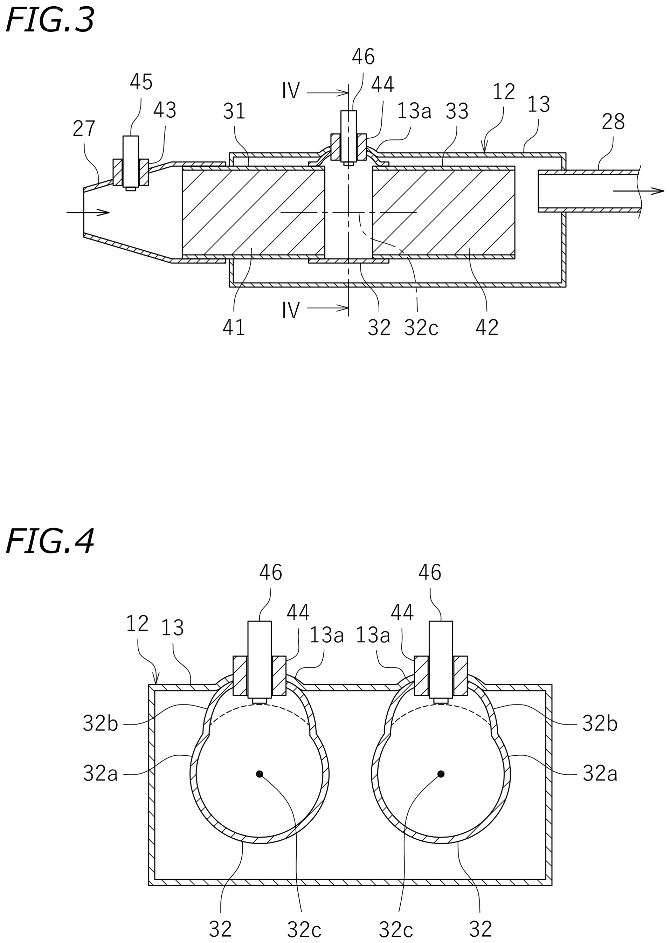

The exhaust chamber **12** serves to expand the exhaust gas. The exhaust chamber **12** has a hollow case **13.** Fig. **3** is a schematic vertical cross-sectional view of the exhaust chamber **12,** schematically showing the case **13** and the internal structure of the case **13.**

As shown in Fig. **3****,** the first pipe **31** is connected to the case **13.** A part of the first pipe **31** is arranged inside the case **13,** and another part thereof is arranged outside the case **13.** A second pipe **32** and a third pipe **33** are arranged inside the case **13.** The third pipe **33** is arranged on the downstream side of the first pipe **31.** The second pipe **32** is connected to the first pipe **31** and the third pipe **33.** The second pipe **32** is arranged between the first pipe **31** and the third pipe **33,** and connects together the first pipe **31** and the third pipe **33.**

A downstream pipe **28** is connected to the case **13.** The downstream pipe **28** is arranged on the downstream side of the third pipe **33.** As shown in Fig. **2****,** the downstream pipe **28** is connected to the silencer **16.**

As shown in Fig. **3****,** a first catalyst **41** is arranged inside the first pipe **31,** and a second catalyst **42** is arranged inside the third pipe **33.** The second catalyst **42** is arranged on the downstream side relative to the first catalyst **41.** The first catalyst **41** purifies the exhaust gas flowing through the first pipe **31.** The second catalyst **42** purifies the exhaust gas flowing through the third pipe **33.** The first catalyst **41** and the second catalyst **42** may be any known catalysts that have been used for purifying exhaust gas. The first catalyst **41** and the second catalyst **42** may be ternary catalysts that convert CO, CH, and NOx into CO₂, H₂O, and N₂, for example.

A cylindrical boss **43** is connected to the tapered pipe **27.** A first oxygen sensor **45** that detects the oxygen concentration of the exhaust gas is mounted on the boss **43.** The first oxygen sensor **45** is inserted in the boss **43.** The first oxygen sensor **45** is connected to the tapered pipe **27** via the boss **43.** The first oxygen sensor **45** is arranged on the upstream side relative to the first catalyst **41.** The first oxygen sensor **45** detects the oxygen concentration of the exhaust gas before being purified by the first catalyst **41.**

Fig. 4 is a cross-sectional view taken along line IV-IV in Fig. 3. In other words, Fig. **4** is a cross-sectional view perpendicular to an axis **32c** of the second pipe **32.** As shown in Fig. **4****,** the case **13** has a protruding portion **13a** that protrudes in the direction away from the axis **32c** of the second pipe **32.** As shown in Fig. **2****,** the protruding portion **13a** is formed in a shape as if a part of a spherical shell has been cut off. As shown in Fig. **3****,** the protruding portion **13a** is formed to protrude in the direction away from the axis **32c** even in a cross section that includes the axis **32c** of the second pipe **32.**

As shown in Fig. **4****,** the second pipe **32** includes a first arc portion **32a** having a first curvature and a second arc portion **32b** having a second curvature larger than the first curvature. Since the second arc portion **32b** has a larger curvature than the first arc portion **32a,** the second arc portion **32b** forms a protruding portion that protrudes in the direction away from the axis **32c** relative to the first arc portion **32a.** The second arc portion **32b** is in surface contact with the protruding portion **13a** of the case **13.** The second arc portion **32b** is laid on the protruding portion **13a** of the case **13.**

A cylindrical boss **44** is connected to the protruding portion **13a** of the case 13 and the second arc portion **32b** of the second pipe **32.** While there is no particular limitation on the method of connecting the boss **44** to the protruding portion **13a** and the second arc portion **32b,** the boss **44** is here welded to the protruding portion **13a** and the second arc portion **32b**. A second oxygen sensor **46** that detects the oxygen concentration of the exhaust gas is mounted on the boss **44.** The second oxygen sensor **46** is inserted in the boss **44.** The second oxygen sensor **46** is connected to the protruding portion **13a** and the second arc portion **32b** via the boss **44.** As shown in Fig. **3****,** the second oxygen sensor **46** is arranged on the downstream side relative to the first catalyst **41** and on the upstream side relative to the second catalyst **42.** The second oxygen sensor **46** detects the oxygen concentration of the exhaust gas after being purified by the first catalyst **41** and before being purified by the second catalyst **42.** For example, the degree of deterioration of the first catalyst 41 can be determined by comparing the oxygen concentration detected by the first oxygen sensor **45** and the oxygen concentration detected by the second oxygen sensor **46.**

As shown in Fig. 3, the second oxygen sensor **46** is configured to detect the oxygen concentration of the exhaust gas inside the second pipe **32.** As shown in Fig. **4****,** in a cross section perpendicular to the axis **32c,** the outer surface of the second pipe **32** is curved. If the second pipe **32** comes into contact with the flat surface of the case **13,** the second pipe **32** and the case **13** will be in point contact with each other. On the other hand, according to the present embodiment, the case **13** has the protruding portion **13a.** The second pipe **32** is in contact with the protruding portion **13a** of the case **13.** Therefore, the second pipe **32** and the case **13** are in surface contact with each other. The contact area between the second pipe **32** and the case **13** is relatively large. The boss **44** is connected to the protruding portion **13a,** which is a portion of the case **13** having a large contact area with the second pipe **32.**

As described above, according to the present embodiment, the second oxygen sensor **46** is connected to the protruding portion **13a** of the case **13** via the boss **44.** Thus, an unused space is less likely to be generated inside the case **13** around the second oxygen sensor **46.** Therefore, it is possible to conserve space in the case **13** of the exhaust chamber **12.**

Since the contact area between the protruding portion **13a** of the case **13** and the second pipe **32** is relatively large, it is possible to achieve desirable welding when welding the case **13** and the second pipe **32** together. Moreover, since it is easier to form the protruding portion **13a** on the case **13** than to form a recess, the case 13 can be easily manufactured. Since water does not accumulate in the protruding portion **13a,** as opposed to a recess, it is possible to prevent water from accumulating around the second oxygen sensor **46** when rainwater, etc., falls onto the case **13.**

The protruding portion **13a** is formed to protrude in the direction away from the axis **32c** of the second pipe **32** in a cross section perpendicular to the axis **32c** of the second pipe **32** (see Fig. 4). The protruding portion **13a** may not necessarily be formed to protrude in the direction away from the axis **32c** in a cross section including the axis **32c.** However, according to the present embodiment, the protruding portion **13a** is formed to protrude in the direction away from the axis **32c** both in a cross section perpendicular to the axis **32c** and in a cross section including the axis **32c** (see Fig. **3**). Thus, it is possible to further suppress the generation of an unused space inside the case **13** around the second oxygen sensor **46.** Therefore, it is possible to further conserve space in the case **13** of the exhaust chamber **12.**

As shown in Fig. **4****,** according to the present embodiment, the second pipe **32** includes the first arc portion **32a** and the second arc portion **32b.** The second oxygen sensor **46** is connected to the second arc portion **32b** via the boss **44.** Here, the curvature of the second arc portion **32b** is larger than the curvature of the first arc portion **32a.** The second arc portion **32b** is a protruding portion that protrudes in the direction away from the axis **32c** more than the first arc portion **32a.** The second arc portion **32b** is laid on the protruding portion **13a** of the case **13.** Therefore, no unused space is generated between the protruding portion **13a** of the case **13** and the second arc portion **32b.** According to the present embodiment, it is possible to further suppress the generation of an unused space inside the case **13** around the second oxygen sensor **46.**

Note that in the present embodiment, a set of the tapered pipe **27,** the first pipe **31,** the second pipe **32,** and the third pipe **33** is provided. A set of the first oxygen sensor **45** and the second oxygen sensor **46** is provided. However, the number of sets is not particularly limited and can be determined appropriately according to the number of cylinders of the internal combustion engine 5, for example. For example, when the number of cylinders of the internal combustion engine **5** is two, two sets of the tapered pipe **27,** the first pipe **31,** the second pipe **32,** the third pipe **33,** the first oxygen sensor **45,** and the second oxygen sensor **46** may be provided. Two each of the first pipe **31,** the second pipe **32,** and the third pipe **33** may be arranged inside the case **13** of the exhaust chamber **12,** and two second oxygen sensors **46** may be connected to the case **13.** Where the internal combustion engine **5** has an even larger number of cylinders, three or more sets of the tapered pipe **27,** the first pipe **31,** the second pipe **32,** the third pipe **33,** the first oxygen sensor **45,** and the second oxygen sensor **46** may be provided.

In the present embodiment, only a part of the first pipe **31** is arranged inside the case **13** as shown in Fig. **3****,** but the entirety of the first pipe **31** may be arranged inside the case **13.** In the present embodiment, the entirety of the third pipe **33** is arranged inside the case **13,** but only a part of the third pipe **33** may be arranged inside the case **13.**

### (Second Embodiment)

In the first embodiment, a part of the first pipe **31** is arranged outside the case **13** of the exhaust chamber **12** (see Fig. **3**). In contrast, in the second embodiment, the entirety of the first pipe **31** is arranged inside the case **13** of the exhaust chamber **12.** In the following description, the same reference signs are used for members similar to those of the first embodiment, and their descriptions will be omitted.

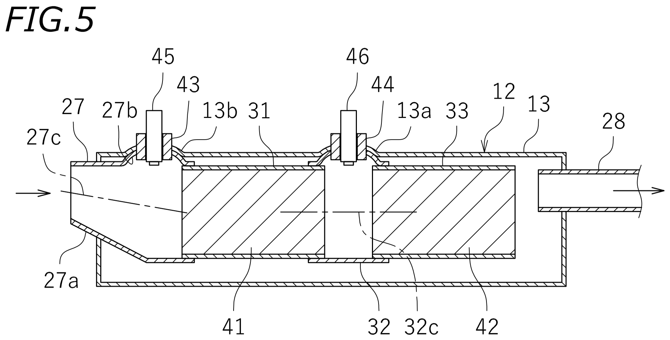

Fig. **5** is a schematic vertical cross-sectional view of the exhaust chamber **12** according to the second embodiment. In the present embodiment, a part of the tapered pipe **27** is arranged inside the case **13** of the exhaust chamber **12.** The entirety of the first pipe **31,** the entirety of the second pipe **32,** and the entirety of the third pipe **33** are arranged inside the case **13.** Note however that a part of the third pipe **33** may be arranged outside the case **13.**

A protruding portion **13b** similar to the protruding portion **13a** is formed on the case **13.** The protruding portion **13b** is formed to protrude in the direction away from an axis **27c** of the tapered pipe **27** both in a cross section perpendicular to the axis **27c** and in a cross section including the axis **27c.** The tapered pipe **27** includes a first arc portion **27a** and a second arc portion **27b** in a cross section perpendicular to the axis **27c.** The curvature of the second arc portion **27b** is larger than the curvature of the first arc portion **27a.** The second arc portion **27b** is formed to protrude in the direction away from the axis **27c** relative to the first arc portion **27a.** The second arc portion **27b** is laid on the protruding portion **13b** of the case **13.** The second arc portion **27b** and the protruding portion **13b** are in surface contact with each other. The boss **43** into which the first oxygen sensor **45** is inserted is connected to the protruding portion **13b** and the second arc portion **27b.** The first oxygen sensor **45** is connected to the protruding portion **13b** of the case **13** and the second arc portion **27b** of the tapered tube **27** via the boss **43.**

The other elements are similar to those of the first embodiment, and their descriptions will be omitted.

According to the present embodiment, the first oxygen sensor **45** is connected to the protruding portion **13b** of the case **13** via the boss **43,** and the second oxygen sensor **46** is connected to the protruding portion **13a** of the case **13** via the boss **44.** Thus, an unused space is less likely to be generated inside the case **13** around the first oxygen sensor **45,** and inside the case **13** around the second oxygen sensor **46.** Therefore, it is possible to conserve space in the case **13** of the exhaust chamber **12.** Otherwise, similar effects to those of the first embodiment can be realized also in the present embodiment.

Note that also in the present embodiment, two or more sets of, or only one set of, the tapered pipe **27,** the first pipe **31,** the second pipe **32,** and the third pipe **33** may be provided.

### (Third Embodiment)

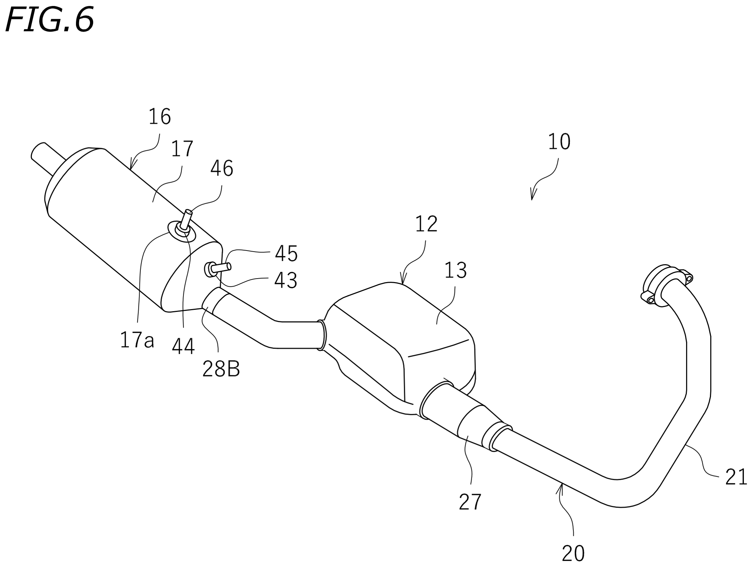

In the first embodiment, an oxygen sensor (the second oxygen sensor **46**) is provided in the exhaust chamber **12** (see Fig. **3**). In contrast, in the third embodiment, an oxygen sensor is provided in the silencer **16** (see Fig. **6**). Note that in the present embodiment, the exhaust chamber **12** may be present or may be absent.

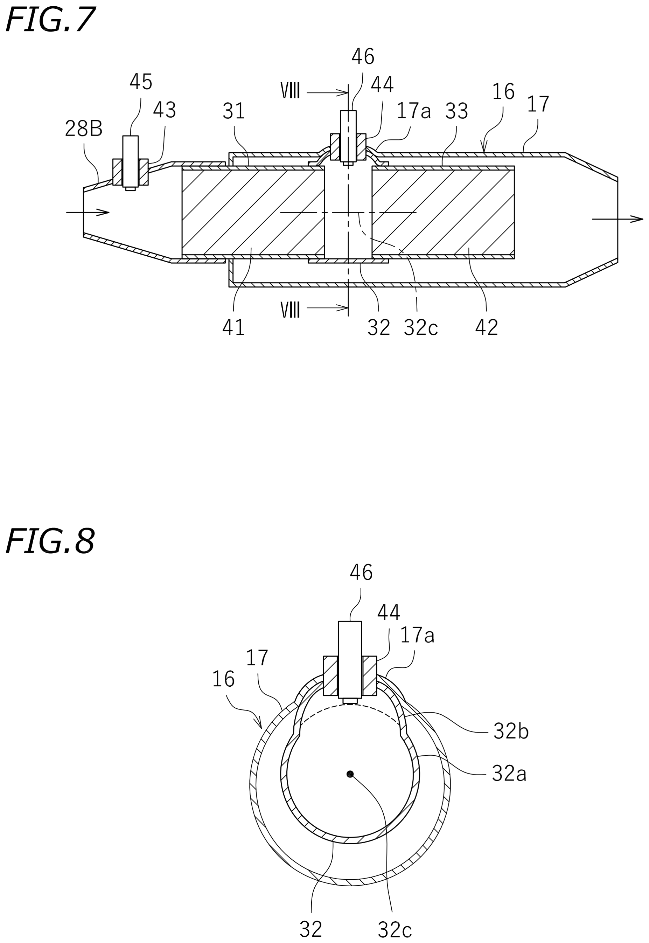

Fig. **7** is a schematic vertical cross-sectional view of the silencer **16** according to the third embodiment. Fig. **8** is a cross-sectional view taken along line VIII-VIII in Fig. **7****.** The silencer **16** includes a hollow case **17.** Note that there is no particular limitation on the cross-sectional shape of the case **17.** The cross-sectional shape of the case **17** may be, for example, a circular shape as shown in Fig. **8****,** or may be an elliptical shape. As shown in Fig. **7****,** in the present embodiment, a part of the first pipe **31,** the entirety of the second pipe **32,** and the entirety of the third pipe **33** are arranged inside the case **17.** Note however that, as will be described later, the entirety of the first pipe **31** may be arranged inside the case **17,** and a part of the third pipe 33 may be arranged outside the case **17.**

The case **17** includes a protruding portion **17a** that protrudes in the direction away from the axis **32c** of the second pipe **32.** The protruding portion **17a** has the same shape as the protruding portion **13a** of the case **13** of the exhaust chamber **12** described above. The protruding portion **17a** is formed to protrude in the direction away from the axis **32c** both in a cross section perpendicular to the axis **32c** (see Fig. **8**) and in a cross section including the axis **32c** (see Fig. **7**). The protruding portion **17a** is laid on the second arc portion **32b** of the second pipe **32.**

As shown in Fig. **7****,** the first oxygen sensor **45** is connected to a downstream pipe **28B** via the boss **43.** The first oxygen sensor **45** detects the oxygen concentration of the exhaust gas before being purified by the first catalyst **41.** The second oxygen sensor **46** is connected to the protruding portion **17a** of the case **17** and the second arc portion **32b** of the second pipe **32** via the boss **44** (see Fig. **8**). The second oxygen sensor **46** detects the oxygen concentration of the exhaust gas after being purified by the first catalyst **41** and before being purified by the second catalyst **42.**

The other elements are similar to those of the first embodiment, and their descriptions will be omitted.

According to the present embodiment, the second oxygen sensor **46** is connected to the protruding portion **17a** of the case **17** of the silencer **16** via the boss **44.** Thus, an unused space is less likely to be generated inside the case **17** around the second oxygen sensor **46.** Therefore, it is possible to conserve space in the case **17** of the silencer **16.** Otherwise, similar effects to those of the first embodiment can be realized also in the present embodiment.

Also in the present embodiment, one set of, or two or more sets of, the downstream pipe **28B,** the first pipe **31,** the second pipe **32,** and the third pipe **33** may be provided.

### (Fourth Embodiment)

In the third embodiment, a part of the first pipe **31** is arranged outside the case **17** of the silencer **16** (see Fig. **7**). In contrast, in the fourth embodiment, the entirety of the first pipe **31** is arranged inside the case **17** of the silencer **16.**

Fig. **9** is a schematic vertical cross-sectional view of the silencer **16** according to the fourth embodiment. In the present embodiment, a part of the downstream pipe **28B** is arranged inside the case **17** of the silencer **16.** The entirety of the first pipe **31,** the entirety of the second pipe **32,** and the entirety of the third pipe **33** are arranged inside the case **17.** Note however that a part of the third pipe **33** may be arranged outside the case **17.**

A protruding portion **17b** similar to the protruding portion **17a** is formed in the case **17.** The protruding portion **17b** is formed to protrude in the direction away from an axis **28c** of the downstream pipe **28B** both in a cross section perpendicular to the axis **28c** and in a cross section including the axis **28c.** The downstream pipe **28B** includes a first arc portion **28a** and a second arc portion **28b** in a cross section perpendicular to the axis **28c.** The curvature of the second arc portion **28b** is larger than the curvature of the first arc portion **28a.** The second arc portion **28b** is a protruding portion that protrudes in the direction away from the axis **28c** relative to the first arc portion **28a.** The second arc portion **28b** is laid on the protruding portion **17b** of the case **17.** The second arc portion **28b** and the protruding portion **17b** are in surface contact with each other. The boss **43** into which the first oxygen sensor **45** is inserted is connected to the protruding portion **17b** and the second arc portion **28b.** The first oxygen sensor **45** is connected to the protruding portion **17b** of the case **17** and the second arc portion **28b** of the downstream pipe **28B** via the boss **43.**

The other elements are similar to those of the third embodiment, and their descriptions will be omitted.

According to the present embodiment, the first oxygen sensor **45** is connected to the protruding portion **17b** of the case **17** via the boss **43,** and the second oxygen sensor **46** is connected to the protruding portion **17a** of the case **17** via the boss **44.** Thus, an unused space is less likely to be generated inside the case **17** around the first oxygen sensor **45,** and inside the case **17** around the second oxygen sensor **46.** Therefore, it is possible to conserve space in the case **17** of the silencer **16.** Otherwise, similar effects to those of the first embodiment can be realized also in the present embodiment.

Also in the present embodiment, one set of, or two or more sets of, the downstream pipe **28B,** the first pipe **31,** the second pipe **32,** and the third pipe **33** may be provided.

While straddled vehicle embodiments have been described above, the first to fourth embodiments above are merely illustrative. Various other embodiments are possible.

In the embodiments described above, the motorcycle **1** includes the first oxygen sensor **45** and the second oxygen sensor **46,** but the first oxygen sensor **45** may be absent in the first embodiment (see Fig. **3**) or the third embodiment (see Fig. **7**). Moreover, either one of the first oxygen sensor **45** and the second oxygen sensor **46** may be absent in the second embodiment (see Fig. **5**) or the fourth embodiment (see Fig. **9**).

In the first to fourth embodiments, either one of the first pipe **31** and the third pipe **33** may be absent, and either one of the first catalyst **41** and the second catalyst **42** may be absent.

In the first to fourth embodiments, the second pipe **32** may not include the second arc portion **32b.** The cross-sectional shape of the second pipe **32** may be formed in a true circular shape.

A straddled vehicle refers to a vehicle that is straddled by a passenger. The straddled vehicle is not limited to the motorcycle 1. The straddled vehicle may be an auto tricycle, an ATV (All Terrain Vehicle), or a snowmobile, for example.

### DESCRIPTION OF REFERENCE SIGNS

1: Motorcycle (straddled vehicle), 5: Internal combustion engine, 12: Exhaust chamber, 13: Case, 13a: Protruding portion, 13b: Protruding portion, 16: Silencer, 17: Case, 17a: Protruding portion, 17b: Protruding portion, 20: Exhaust pipe, 27: Tapered pipe (second pipe), 27a: First arc portion, 27b: Second arc portion, 31: First pipe, 32: Second pipe (second pipe, fourth pipe), 32a: First arc portion, 32b: Second arc portion, 33: Third pipe, 41: First catalyst, 42: Second catalyst, 45: First oxygen sensor (oxygen sensor), 46: Second oxygen sensor (oxygen sensor)

## Claims

1. A straddled vehicle **(1),** comprising:
an internal combustion engine **(5);**
an exhaust pipe **(20)** connected to the internal combustion engine **(5)** for discharging exhaust gas from the internal combustion engine **(5);**
a first catalyst **(41)** for purifying the exhaust gas flowing through the exhaust pipe **(20);**
an oxygen sensor **(46)** for detecting oxygen concentration of the exhaust gas flowing through the exhaust pipe **(20);** and
a case **(13),** wherein:
the exhaust pipe **(20)** includes a first pipe **(31)** at least a part of which is arranged inside the case **(13),** with the first catalyst **(41)** arranged inside the first pipe **(31),** and a second pipe **(32)** arranged inside the case **(13),** the oxygen sensor **(46)** being connected to the second pipe **(32);**
the case **(13)** includes a protruding portion **(13a)** that protrudes in a direction away from an axis **(32c)** of the second pipe **(32)** in a cross section perpendicular to the axis **(32c)** of the second pipe **(32);** and
the oxygen sensor **(46)** is connected to the protruding portion **(13a)** of the case **(13).**

2. The straddled vehicle **(1)** according to claim 1, wherein the protruding portion **(13a)** of the case **(13)** is formed to protrude in the direction away from the axis **(32c)** in a cross section including the axis **(32c)** of the second pipe **(32)** of the case **(13).**

3. The straddled vehicle **(1)** according to claim 1 or 2, comprising:
a second catalyst **(42)** arranged on a downstream side in a flow direction of the exhaust gas relative to the first catalyst **(41)** in the exhaust pipe **(20),** wherein:
the exhaust pipe **(20)** includes a third pipe **(33)** at least a part of which is arranged inside the case **(13),** with the second catalyst **(42)** arranged inside the third pipe **(33);** and
the second pipe **(32)** is arranged between the first pipe **(31)** and the third pipe **(33).**

4. The straddled vehicle **(1)** according to claim 3, wherein:
the second pipe **(32)** includes a first arc portion **(32a)** having a first curvature and a second arc portion **(32b)** having a second curvature larger than the first curvature in a cross section perpendicular to the axis **(32c)** of the second pipe **(32);** and
the oxygen sensor **(46)** is connected to the second arc portion **(32b)** of the second pipe **(32).**

5. The straddled vehicle **(1)** according to claim 1 or 2, comprising:
a second catalyst **(42)** provided on a downstream side in a flow direction of the exhaust gas relative to the first catalyst **(41)** in the exhaust pipe **(20),** wherein:
the exhaust pipe **(20)** includes a third pipe **(33)** at least a part of which is arranged inside the case **(13),** with the second catalyst **(42)** arranged inside the third pipe **(33),** and a fourth pipe **(32)** arranged inside the case **(13)** and arranged between the first pipe **(31)** and the third pipe **(33);** and
the second pipe **(27)** is arranged on an upstream side in the flow direction of the exhaust gas relative to the first pipe **(31).**

6. The straddled vehicle **(1)** according to claim 5, wherein:
the second pipe **(27)** includes a first arc portion **(27a)** having a first curvature and a second arc portion **(27b)** having a second curvature larger than the first curvature in a cross section perpendicular to the axis **(27c)** of the second pipe **(27);** and
the oxygen sensor **(45)** is connected to the second arc portion **(27b)** of the second pipe **(27).**

7. The straddled vehicle **(1)** according to any one of claims 1 to 6, wherein the case **(13)** constitutes at least a part of an exhaust chamber **(12)** that expands the exhaust gas or a silencer **(16).**
